# EUROPÄISCHE PATENTSCHRIFT

(11) **EP 2 060 961 B1**
(45) Veröffentlichungstag und Bekanntmachung des Hinweises auf die Patenterteilung: **25.12.2013**
(21) Anmeldenummer: 08168634.7
(22) Anmeldetag: 07.11.2008
(51) Int. Cl.: G06F 1/04, G06F 1/08

(54) **GALS-Schaltung mit arbitriertem eingangs- und ausgangsseitigem Taktantrieb**
GALS circuit with arbitrated input and output clock drive
Circuit GALS doté d'une commande par impulsion des côtés entrée et sortie

(30) Priorität: 09.11.2007 DE 102007054302; 09.05.2008 DE 102008023507
(43) Veröffentlichungstag der Anmeldung: 20.05.2009
(73) Patentinhaber: IHP GmbH-Innovations for High Performance Microelectronics / Leibniz-Institut für innovative Mikroelektronik, 15236 Frankfurt / Oder (DE)
(72) Erfinder: Krstic, Milos, 15232 Frankfurt/Oder (DE); Grass, Eckhard, 12589 Berlin (DE)
(74) Vertreter: Eisenführ, Speiser & Partner

(56) Entgegenhaltungen:
- US-A- 5 566 306
- KESSELS J: "Register Communication between Mutually Asynchronous Domains" ASYNCHRONOUS CIRCUITS AND SYSTEMS, 2005. ASYNC 2005. PROCEEDINGS. 11TH IEEE INTERNATIONAL SYMPOSIUM ON NEW YORK CITY, NY, USA 14-16 MARCH 2005, PISCATAWAY, NJ, USA,IEEE, 14. März 2005 (2005-03-14), Seiten 66-75, XP010777862 ISBN: 978-0-7695-2305-7
- KESSELS J ET AL: "Clock synchronization through handshake signalling" MICROPROCESSORS AND MICROSYSTEMS, IPC BUSINESS PRESS LTD. LONDON, GB, Bd. 27, Nr. 9, 1. Oktober 2003 (2003-10-01), Seiten 447-460, XP004453317 ISSN: 0141-9331
- MUTTERSBACH J ET AL: "Globally-asynchronous locally-synchronous architectures to simplify the design of on-chip systems", ASIC/SOC CONFERENCE, 1999. PROCEEDINGS. TWELFTH ANNUAL IEEE INTERNATIO NAL WASHINGTON, DC, USA 15-18 SEPT. 1999, PISCATAWAY, NJ, USA,IEEE, US LNKD- DOI:10.1109/ASIC.1999.806526, 15 September 1999 (1999-09-15), pages 317-321, XP010360322, ISBN: 978-0-7803-5632-0

## Beschreibung

Die Erfindung betrifft eine global asynchrone, lokal synchrone Schaltung, die nachfolgend auch als GALS-Schaltung bezeichnet wird. Die GALS-Schaltung enthält ein lokal synchrones Schaltungsmodul und eine asynchrone Hüllschaltung, die mit dem lokal synchronen Schaltungsmodul verbunden ist.

Aus der Patentanmeldung US 2007/0097771 A1 ist eine asynchrone First-in First-out (FIFO) Zelle zum Verbinden zweier GALS-Schaltungen bekannt. Die FIFO-Zelle umfasst ein D-Flipflop zum Zugreifen auf Daten; einen Detektor zum Detektieren des Zustands des D-Flipflops und einen senderseitigen Handshake-Controller zum Senden von Senderbestätigungssignalen zu einer ersten asynchronen Hüllschaltung sowie einen entsprechenden empfängerseitigen Handshake-Controller. Die FIFO-Zelle ist zwischen den asynchronen Hüllschaltungen der zu verbindenden GALS-Schaltungen angeordnet. Die zu verbindenden GALS-Schaltungen können an verschiedenen Betriebsspannungen angeschlossen sein.

Aus der WO 2007/014949 A2 und der WO 2004/066526 A2 sind GALS-Schaltungen der vorliegenden Anmelderin bekannt, die einerseits eingangsseitig von einer externen Anfrage angetrieben werden, jedoch darüber hinaus auch ausgebildet sind, Taktsignale intern mit Hilfe beispielsweise eines Ringoszillators zu erzeugen.

Ein Nachteil der dort beschriebenen GALS-Schaltungen ist es, dass ihre Hüllschaltung relativ aufwändig gestaltet ist. Dies führt zu einer relativ hohen Latenzzeit, die den Datendurchsatz durch die GALS-Schaltung begrenzt.

Das der vorliegenden Erfindung zugrunde liegende technische Problem ist es daher, eine GALS-Schaltung anzugeben, die mit einer vereinfachten Struktur einen höheren Datendurchsatz ermöglicht.

Dies gelingt mit einer GALS-Schaltung nach Anspruch 1. Die erfindungsgemäße GALS-Schaltung hat ein lokal synchrones Schaltungsmodul und eine asynchrone Hüllschaltung, die mit dem lokal synchronen Schaltungsmodul verbunden ist. Die asynchrone Hüllschaltung ist ausgebildet,
- ein Dateneingabe-Anfragesignal (REQ_In) von einer eingangsseitig verbindbaren ersten externen GALS-Schaltung zu empfangen, das anzeigt, dass bei der ersten externen GALS-Schaltung an das lokal synchrone Schaltungsmodul zu sendende Eingabedaten vorliegen;
- den Eingang eines Dateneingangs-Anfragesignals durch Senden eines Dateneingangs-Bestätigungssignals an die erste externe GALS-Schaltung zu bestätigen;
- auf den Empfang des Dateneingangs-Anfragesignals hin einen Taktzyklus eines Dateneingangs-Taktsignals zu erzeugen und an das lokal synchrone Schaltungsmodul auszugeben;
dadurch gekennzeichnet, dass die Hüllschaltung zusätzlich ausgebildet ist,
- ein Datenausgabe-Anfragesignal (REQ_out) von einer ausgangsseitig verbindbaren zweiten externen GALS-Schaltung zu empfangen, welches anzeigt, dass die zweite externen GALS-Schaltung vom lokal synchronen Schaltungsmodul Ausgabedaten abfragt;
- den Empfang eines Datenausgabe-Anfragesignals durch Senden eines Datenausgabe-Bestätigungssignals an die zweite GALS-Schaltung zu bestätigen; und
- auf den Empfang des Datenausgabe-Anfragesignals hin einen Taktzyklus eines Datenausgabe-Taktsignals zu erzeugen und an das lokal synchrone Schaltungsmodul auszugeben.

Die erfindungsgemäße GALS-Schaltung hat eine asynchrone Hüllschaltung, die im Gegensatz zu bekannten Lösungen nicht nur Dateneingangsanfragesignale empfängt und für ihren Betrieb nutzt, sondern darüber hinaus auch ausgebildet ist, Anfragensignale für eine Datenausgabe handzuhaben. Die GALS-Schaltung der vorliegenden Erfindung wird daher vollständig, also sowohl auf der Eingangsseite als auch auf der Ausgangsseite, von Anfragesignalen getrieben.

Mit diesem Konzept gelingt es, die Struktur der asynchronen Hüllschaltung wesentlich zu vereinfachen. Denn es entfällt die Notwendigkeit, Taktsignale intern zu erzeugen. Auf diese Weise können in den genannten bekannten GALS-Schaltungen vorgesehene Ringoszillatoren und Time-out-Schaltungen sowie aufwändige Eingangs- und Ausgangsports vermieden werden. Dies ermöglicht eine wesentlich einfachere Schaltungsstruktur der asynchronen Hüllschaltung, die mit reduziertem Flächen- und Energiebedarf sowie einer reduzierten Latenzzeit einhergeht. Auf diese Weise wird der Datendurchsatz der erfindungsgemäßen GALS-Schaltung erhöht.

Bei der erfindungsgemäßen GALS-Schaltung werden auf den Empfang von Anfragesignalen für eine Dateneingabe oder eine Datenausgabe jeweils ein entsprechender Taktzyklus erzeugt und an das lokal synchrone Schaltungsmodul ausgegeben. Als Taktzyklus ist dabei eine Periode eines Taktsignals zu verstehen. Ein einzelner Taktzyklus wird von der lokal synchronen Schaltung, ausgehend von einem niedrigen Signalpegel des Taktsignals zu Beginn, durch eine Anstiegsflanke und eine der Anstiegsflanke nachfolgende abfallende Flanke erkannt. Eine gleichwertige Alternative geht von einem hohen Signalpegel des Taktsignals aus und hat zunächst eine abfallende Flanke. Andere Ausprägungen von Taktzyklen des Taktsignals sind möglich. Wesentlich ist, dass das Taktsignal während der aktiven Taktperiode von dem Signalpegel unterscheidbar ist, der vorliegt, wenn kein Anfragesignal anliegt. Werden mehrere Taktzyklen hintereinander erzeugt, so gilt selbstverständlich in üblicher Weise, dass der Abstand zwischen zwei zeitlich benachbarten gleichphasigen Flanken des Taktsignals einen Taktzyklus bildet.

Nachfolgend werden Ausführungsbeispiele der erfindungsgemäßen GALS-Schaltung beschrieben. Die Ausführungsbeispiele können miteinander kombiniert werden, wenn sich aus der Beschreibung nicht eindeutig entnehmen lässt, dass die beschriebenen Ausführungsbeispiele Alternativen zueinander bilden.

Bei einer Ausführungsform der erfindungsgemäßen GALS-Schaltung ist die Hüllschaltung ausgebildet, in dem Fall, dass weder ein Dateneingabe-Anfragesignal noch ein Datenausgabe-Anfragesignal anliegt, kein Taktsignal an das synchrone Schaltungsmodul auszugeben.

Vorteilhaft ist eine Arbitrierung der Dateneingangs- und Datenausgabefragesignale, um Konflikte bei gleichzeitigem Anliegen beider Anfragesignale zu vermeiden. In einer bevorzugten Ausführungsform enthält die Hüllschaltung der GALS-Schaltung daher einer Arbiterschaltung, die einen Eingangs-Anfrageport aufweist, dem das Dateneingangs-Anfragesignal zugeführt ist, und die einen Ausgangs-Anfrageport aufweist, dem das Datenausgabe-Anfragesignal zugeführt ist, und die ausgebildet ist, während der Zeitdauer der Ausgabe des Taktzyklus des Dateneingangs-Taktsignals kein Datenausgabe-Taktsignal zu erzeugen und während der Zeitdauer der Ausgabe des Taktzyklus des Datenausgangs-Taktsignals kein Dateneingangs-Taktsignal zu erzeugen.

Bei diesem Ausführungsbeispiel können gleichzeitige Anfragen von externen Schaltungen auf der Eingangs- und Ausgabe-Seite gehandhabt werden. Die Arbiter-Schaltung ermöglicht darüber hinaus die Versorgung der lokal synchronen Schaltung innerhalb der GALS-Schaltung mit einem antreibenden Taktsignal ausreichender Frequenz, ohne dass Glitches und Clipping auftreten. Bei einem Glitch handelt es sich um einen ungültigen Signalzustand, beispielsweise einen kurzzeitigen Signalfehler, etwa in Form eines Signalimpulses mit einer Dauer, die kürzer ist als eine spezifizierte minimale Dauer.

Die Arbiter-Schaltung kann beispielsweise so realisiert werden, dass sie ein MUTEX-Element (engl. MUTual EXclusion element) enthält, das ausgebildet ist, bei gleichzeitigem Vorliegen eines Dateneingabe-Anfragesignals und eines Datenausgabe-Anfragesignals eines der beiden Anfragesignale zu bevorzugen und den Empfang des anderen der beiden Anfragesignale zu verzögern, bis der Taktzyklus des auf das bevorzugte Anfragesignal hin erzeugten Taktsignals, also entweder des Dateneingangs- oder des Datenausgangs-Taktsignals, beendet ist. Eine solche Arbiter-Schaltung kann zugleich die Funktion eines Eingangs- und Ausgangsports übernehmen und auf diese Weise eine besonders einfache Schaltungsstruktur der Hüllschaltung ermöglichen.

Die Arbiter-Schaltung dieses Ausführungsbeispiels erzielt einen sicheren Übergang zwischen einem Eingabe- und einem Ausgabe-Modus der GALS-Schaltung, indem das Taktsignal für den Dateneingang gleichzeitig zur Verzögerung der Zuführung des Datenausgabe-Anfragesignals führt. Auf diese Weise kann die Dateneingabe abgearbeitet werden, bevor die Hüllschaltung die Abarbeitung einer Datenausgabe-Anfrage zulässt. Entsprechendes gilt umgekehrt, wenn zuerst ein Anfragesignal für die Datenausgabe vorliegt und während der Dauer des entsprechenden Taktsignals ein Anfragesignal auf der Eingangsseite eintrifft. In diesem Fall wird dann die Abarbeitung der Dateneingabe-Anfrage in entsprechender Weise verzögert.

Diese Arbiter-Schaltung kann beispielsweise so realisiert werden, dass der Eingangs-Anfrageport und der Ausgangs-Anfrageport der Arbiter-Schaltung jeweils ein UND-Gatter mit zwei Signaleingängen aufweisen, wobei dem einen Signaleingang des jeweiligen UND-Gatters das Dateneingabe-Anfragesignal bzw. Datenausgabe-Anfragesignal zugeführt ist und der andere Signaleingang des jeweiligen UND-Gatters über eine jeweilige erste Verzögerungsschaltung und ein jeweiliges Inverterelement mit dem dem jeweils anderen Anfragesignal zugeordneten Taktsignalausgang des MUTEX-Elements verbunden ist, also mit dem Datenausgabe-Taktsignal-Ausgang bzw. dem Dateneingabe-Taktsignal-Ausgang. Selbstverständlich sind jedoch auch andere Ausführungen der Arbiter-Schaltung möglich, wie weiter unten beschrieben wird.

Es hat sich gezeigt, dass eine Verzögerung des nicht bevorzugten Anfragesignals um etwa 45 % der Dauer eines Taktzyklus eine Kollision und für den sicheren Betrieb gefährliche Glitches und Clipping vermeidet. Die beschriebene Arbiter-Schaltung eignet sich für die Verwendung bei mesochronem Takten.

Eine auch für andere Taktschemen geeignete Modifikation der beschriebenen Arbiter-Schaltung sieht vor, dass das Dateneingabe- und das Datenausgabe-Bestätigungssignal nach Ausgabe durch das MUTEX-Element einer jeweiligen zweiten Verzögerungsschaltung zugeführt werden. Durch die Verzögerung der Bestätigungssignale wird eine ausreichende Länge der Taktperiode garantiert. Bevorzugt ist hierbei eine Verzögerung der Bestätigungssignale um 90 bis 95 % des Taktzyklus in Anstiegsrichtung. In Abwärtsrichtung ist eine Verzögerung nicht vorgesehen. Bei dieser Ausführungsform braucht sich die anfragende externe GALS-Schaltung nicht um die Takt-Periode der GALS-Schaltung, die die Anfrage empfängt zu kümmern.

Die erfindungsgemäße GALS-Schaltung ermöglicht die Bildung einer integrierten Schaltung mit einem vollständig auf Dateneingabe- und Datenausgabe-Anfragesignalen beruhenden Konzept. Es ist jedoch auch denkbar, die erfindungsgemäße GALS-Schaltung mit anderen GALS-Schaltungen nach vorbekannten Konzepten zu kombinieren.

Ausführungsbeispiele der erfindungsgemäßen GALS-Schaltung sind auch in den abhängigen Patentansprüchen beschrieben.

Nachfolgend werden weitere Ausführungsbeispiele der erfindungsgemäßen GALS-Schaltung anhand der Figuren beschrieben. Dabei wird auf die Figuren Bezug genommen. Es zeigen:
Fig. 1 ein schematisches Blockdiagramm eines Ausführungsbeispiels einer GALS-Schaltung;
Fig. 2 ein Schaltbild einer Arbiter-Schaltung zur Verwendung in der Hüllschaltung der GALS-Schaltung des Anspruchs 1; und
Fig. 3 ein Schaltbild einer alternativen Arbiter-Schaltung.

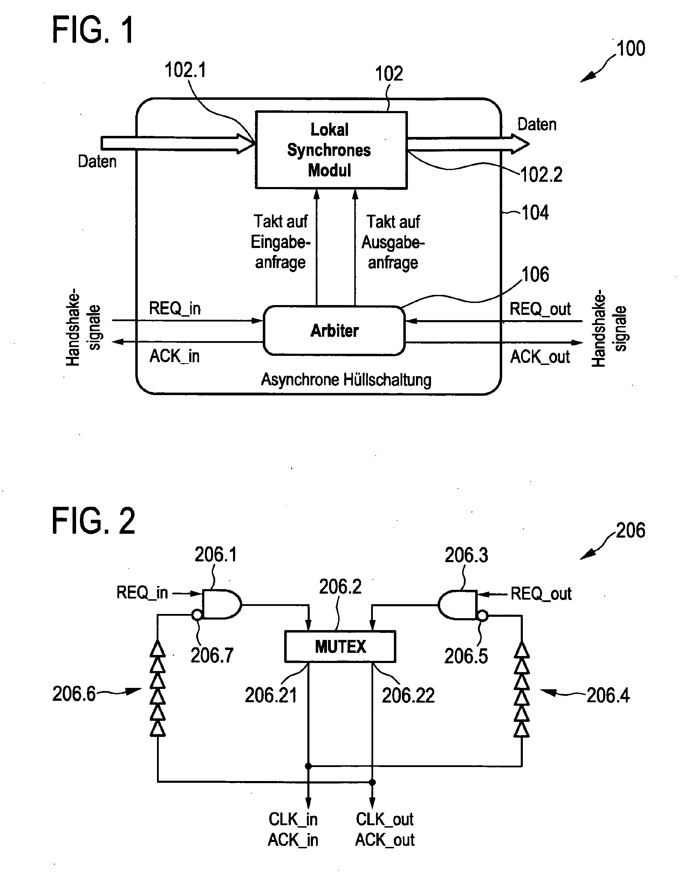

Fig. 1 zeigt ein schematisches Blockdiagramm eines Ausführungsbeispiels einer GALS-Schaltung 100. Die GALS-Schaltung 100 enthält ein lokal synchrones Schaltungsmodul 102, das in bekannter Weise zur Datenverarbeitung ausgebildet ist. Dem lokal synchronen Schaltungsmodul 102 können über einen Eingang 102.1 Daten zugeführt werden. Weiterhin gibt das lokal synchrone Schaltungsmodul 102 über einen Ausgang 102.2 Daten nach extern aus. Externe Schaltungsmodule sind typischerweise ebenfalls GALS-Schaltungen.

Dateneingabe und Datenausgabe des lokal synchronen Schaltungsmoduls 102 werden von einer asynchronen Hüllschaltung 104 gesteuert. Die asynchrone Hüllschaltung 104 enthält eine Arbiter-Schaltung 106. Die Arbiter-Schaltung 106 dient zur Zuführung von unterschiedlichen Taktsignalen, je nachdem, ob ein Dateneingabe-Anfragesignal (REQ_In) oder ein Datenausgabe-Anfragesignal (REQ_out) von extern anliegt. Dementsprechend wird also ein Dateneingangs-Taktsignal oder ein Datenausgabe-Taktsignal an das lokal synchrone Schaltungsmodul 102 ausgegeben. Zugleich ist die Arbiter-Schaltung 106 ausgebildet, mit externen GALS-Schaltungen Handshake-Signale auszutauschen. Dargestellt sind der Einfachheit halber in Fig. 1 lediglich die von extern empfangenen Dateneingangs-Anfragesignale und Datenausgabe-Anfragesignale sowie die jeweiligen Dateneingangs-Bestätigungssignale (ACK_in) und Datenausgabe-Bestätigungssignale (ACK_out). Die Signale bzw. die für sie vorgesehenen Signalleitungsstrukturen sind durch Pfeile symbolisiert, deren Pfeilspitze anzeigt, ob es sich um eingehende oder ausgehende Signale handelt.

Mit der in Fig. 1 dargestellten Struktur der GALS-Schaltung 100 gelingt also eine vollständig von Anfragesignalen getriebene Datenverarbeitung im lokal synchronen Modul 102. Auf eine interne Takterzeugung in der asynchronen Hüllschaltung ist im vorliegenden Ausführungsbeispiel vollständig verzichtet worden. Daher werden komplexe Schaltungsmodule, die in vorbekannten Hüllschaltungen verwendet werden, obsolet. Beispielsweise ist es nicht erforderlich, in der Hüllschaltung 104 Ringoszillatoren für die Takterzeugung oder eine spezielle Time-out-Schaltung vorzusehen, wie sie in den eingangs zitierten Veröffentlichungen benötigt werden. Weiterhin werden keine separaten Eingabe-/Ausgabe-Ports benötigt.

Die GALS-Schaltung der Fig. 1 arbeitet in drei Betriebsmoden: Eingabe, Ausgabe und Ruhezustand. Der Eingabemodus wird gestartet, wenn an der Arbiter-Schaltung 106 ein Dateneingangs-Anfragesignal anliegt, denen typischerweise die Eingangsdaten am Dateneingang 102.1 des lokal synchronen Schaltungsmoduls 102 folgen. Das Dateneingangs-Anfragesignal wird von der Arbiter-Schaltung 106 bestätigt, indem ein ACK_in-Signal an die externe anfragende Schaltung zurückgesendet wird. Weiterhin wird eine einzelne Taktperiode für das lokal synchrone Schaltungsmodul 102 erzeugt und ausgegeben. Liegen weitere Daten zur Eingabe vor, wird die externe Schaltung weitere Dateneingangs-Anfragesignale senden, die zur Erzeugung weiterer Bestätigungs- und Dateneingangs-Taktsignale führt.

In ähnlicher Weise wird der Datenausgabemodus betrieben. Trifft eine Datenausgabe-Anfrage (REQ_out) am entsprechenden Port der Arbiter-Schaltung 106 ein, wird dies von der Arbiter-Schaltung 106 bestätigt, indem ein Datenausgabe-Bestätigungssignal ACK_out an die externe anfragende Schaltung zurückgesendet wird. Weiterhin wird ein Taktzyklus für die Datenausgabe erzeugt und über einen entsprechenden Ausgang an das lokal synchrone Schaltungsmodul 102 ausgegeben. Die Ausgabedaten werden also gewissermaßen von dem lokal synchronen Schaltungsmodul "abgesogen", indem die externe GALS-Schaltung, die die Ausgabedaten benötigt, entsprechende Datenausgabe-Anfragesignale schickt.

Wenn weder ein Dateneingangs-Anfragesignal noch ein Datenausgangs-Anfragesignal anliegt, ist sowohl die asynchrone Hüllschaltung 104 als auch das lokal synchrone Schaltungsmodul 102 in einem Ruhezustand.

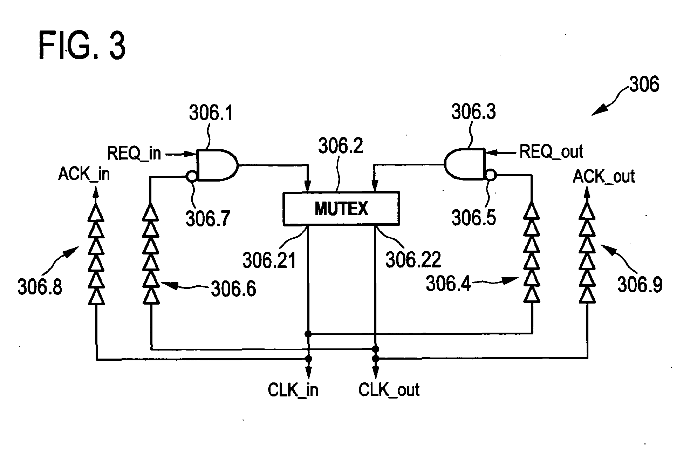

Die beschriebene asynchrone Hüllschaltung hat den erwähnten Vorteil einer besonders einfachen Schaltungsstruktur mit einem erhöhten Datendurchsatz. Jedoch ist es sinnvoll, bei einer derartigen Architektur Vorkehrungen für ein mögliches gleichzeitiges Auftreten von Anfragen auf der Eingangs- und Ausgabeseite vorzusehen. Ausführungsbeispiele geeigneter Arbiter-Schaltungen werden anhand der nachfolgenden Figuren 2 und 3 beschrieben.

Fig. 2 zeigt ein Schaltbild einer Arbiter-Schaltung 206 zur Verwendung in der Hüllschaltung der GALS-Schaltung des Anspruchs 1. Die Arbiter-Schaltung 206 kann in der GALS-Schaltung der Fig. 1 die Arbiter-Schaltung 106 bilden. Eingangsseitige Dateneingangs-Anfragesignale REQ_in sind einem UND-Gatter 206.1 zugeführt, dessen Ausgang einem MUTEX-Block 206.2 zugeleitet wird. Auch ausgangsseitig ist ein weiteres UND-Gatter 206.3 vorgesehen, das an einem Eingang Datenausgabe-Anfragesignale REQ_out empfängt. Der Ausgang des UND-Gatters 206.3 ist einem zweiten Eingang des MUTEX-Elements 206.2 zugeführt.

Die Funktion des MUTEX-Elements 206.2 lässt sich wie folgt beschreiben: wenn keine Anfrage-Signale an seinen Eingängen anliegen, sind auch die beiden Ausgänge des MUTEX-Blocks 206.2 inaktiv. Inaktiv bedeutet beispielsweise, dass der Signalpegel am Ausgang des MUTEX-Blocks niedrig ist, entsprechend dem logischen Zustand 0. Wenn an einem Eingang des MUTEX-Blocks 206.2 ein aktives Signal anliegt, wird ein diesem Eingang zugeordneter Signalausgang aktiviert, indem beispielsweise der Signalpegel auf hoch geschaltet wird. Dieser zugeordnete Ausgang dient zur Ausgabe eines entsprechenden Taktsignals, also entweder eines Dateneingangs-Taktsignals oder eines Datenausgabe-Taktsignals sowie zur Ausgabe eines entsprechenden Bestätigungssignals an eine externe GALS-Schaltung. Entsprechend ist also ein erster Signalausgang 206.21 für die Ausgabedaten des Eingangs-Bestätigungssignals und des Dateneingangs-Taktsignals vorgesehen. Es versteht sich, dass für diese beiden Signale auch separate Ausgänge mit entsprechend getrennten Leitungen vorgesehen sein können.

Ein zweiter Signalausgang 206.22 dient zur Ausgabe eines Datenausgabe-Bestätigungssignals und eines Datenausgabe-Taktsignals. Auch hier können selbstverständlich zwei separate Signalausgänge vorgesehen sein.

Die Arbitrierung gelingt bei dieser Arbiter-Schaltung 206 durch Rückführung der ausgegebenen Signale auf das gegenüberliegende UND-Gatter unter Verzögerung und Invertierung. Das Dateneingangs-Taktsignal CLK_In ist über eine Verzögerungsschaltung 206.4 und ein Inverter-Gatter 206.5 auf das zweite UND-Gatter 206.3 zurückgeführt. Das Datenausgabe-Taktsignal CLK_out ist über eine Verzögerungsschaltung 206.6 und ein UND-Gatter 206.7 auf das erste UND-Gatter 206.1 zurückgeführt.

Liegen zeitgleich sowohl ein Dateneingangs-Anfragesignal und ein Datenausgabe-Anfragesignal an den entsprechenden UND-Gattern 206.1 und 206.3 an, so sorgt der MUTEX-Block 206.2 dafür, dass nur einer der beiden Ausgänge 206.21 und 206.22 aktiviert wird. Der aktive Ausgang sorgt dafür, dass der Empfang des anderen Anfragesignals durch das mit ihm verbundene UND-Gatter solange verzögert wird, bis der Taktzyklus beendet ist und der entsprechende Ausgang des MUTEX-Elements wieder inaktiv ist. Erst dann kann das andere Anfragesignal bearbeitet werden.

Die Arbiter-Schaltung 206 integriert auf diese Weise die Funktion eines Eingangs- und Ausgabe-Ports. Durch ausreichende Verzögerung der Bestätigungssignale gelingt eine sichere Betriebsweise. Die Verzögerungsschaltungen sollten hierfür etwa eine Verzögerung von nicht größer als 50%, beispielsweise 45%, der Taktperiode bewirken. Die Dauer eines Bestätigungssignals sollte in diesem Ausführungsbeispiel nicht weniger als 50% des Taktzyklus betragen.

Die Arbiter-Schaltung der Fig. 2 erfordert von externen GALS-Schaltungen die Einhaltungen eines erforderlichen minimalen Zeitabstandes zwischen einem Bestätigungssignal und einem nächsten Anfragesignal. Diese Struktur wird ist daher nur für mesochrone Taktung geeignet.

Eine alternative Arbiter-Schaltung ist in Fig. 3 angegeben. Die Arbiter-Schaltung der Fig. 3 ähnelt der Arbiter-Schaltung der Fig. 2 in der Behandlung der eingangs- und ausgangsseitigen Anfragesignale. Die entsprechenden Gestaltungselemente sind in der Arbiter-Schaltung der Fig. 3 mit Bezugszeichen gekennzeichnet, die sich von denen der Fig. 2 allein durch ihre erste Ziffer unterscheiden. Zu Struktur und Funktionsweise wird insoweit auf die Beschreibung der Fig. 2 verwiesen.

In Abwandlung der Arbiter-Schaltung der Fig. 2 wird bei der Arbiter-Schaltung der Fig. 3 eine zusätzliche Verzögerung bei der Ausgabe der Bestätigungssignale eingefügt. Hierzu sind zusätzliche, entsprechend angepasste Verzögerungselemente 306.8 auf der Eingangsseite und 306.9 auf der Ausgangsseite vorgesehen. Die zusätzliche Verzögerung betrifft nicht die ausgegebenen Taktsignale CLK_In und CLK_out. Die angepassten Verzögerungsschaltungen 306.8 und 306.9 sollten in Anstiegsrichtung etwa 90 bis 95 % eines Taktzyklus verzögern. In abfallender Richtung sollten sie nicht verzögern.

Die Verzögerungsschaltung 306.4, über das das am Ausgang 306.21 des MUTEX-Blocks 306.2 ausgegebene Datenausgabe-Taktsignal CLK_In verzögert über ein Inverter-Gatter 306.5 auf einen Eingang des UND-Gatters 306.3 zurückgeführt wird, und die Verzögerungsschaltung 306.6, über das das am Ausgang 306.22 des MUTEX-Blocks 306.2 ausgegebene Datenausgabe-Taktsignal CLK_out verzögert über ein Inverter-Gatter 306.7 auf einen Eingang des UND-Gatters 306.1 zurückgeführt wird, sind in diesem Beispiel so beschaffen, dass zwischen den Takten des Taktzyklus ein genügend langer Zeitraum mit einem niedrigen Signalpegel des Taktsignals erreicht wird.

Die Länge dieser Zeitverzögerung bestimmt also die Länge des niedrigen Signalpegels zwischen den Takten. Diese Zeitverzögerung ist kleiner als die Ausschaltzeitverzögerung in den Verzögerungspfaden mit den Verzögerungsschaltungen 306.8 und 306.9 zur Ausgabe der Bestätigungssignale. Dadurch wird vermieden, dass einer der Anfragesignaleingänge dadurch ständig blockiert wird, dass über den anderen Anfragesignaleingang aufeinanderfolgende Signale REQ_in bzw. REQ_out eingehen.

Eine derartige Schaltungsstruktur erlaubt es in einer Master-Slave-Schaltungsstruktur, dass der Master die Taktperiode des Slave nicht berücksichtigen muss.

## Patentansprüche

1. Global Asynchrone Lokal Synchrone (GALS-)Schaltung (100), mit einem lokal synchronen Schaltungsmodul (102) und einer asynchronen Hüllschaltung (104), die mit dem lokal synchronen Schaltungsmodul (102) verbunden und ausgebildet ist,
- ein Dateneingabe-Anfragesignal (REQ_ln) von einer eingangsseitig verbindbaren ersten externen GALS-Schaltung zu empfangen, das anzeigt, dass bei der ersten externen GALS-Schaltung an das lokal synchrone Schaltungsmodul (102) zu sendende Eingabedaten vorliegen;
- den Eingang eines Dateneingangs-Anfragesignals durch Senden eines Dateneingangs-Bestätigungssignals (ACK_in) an die erste externe GALS-Schaltung zu bestätigen;
- auf den Empfang des Dateneingabe-Anfragesignals (REQ_In) hin einen Taktzyklus eines Dateneingangs-Taktsignals (CLK_in) zu erzeugen und an das lokal synchrone Schaltungsmodul (102) auszugeben;
**dadurch gekennzeichnet, dass** die Hüllschaltung (104) zusätzlich ausgebildet ist,
- ein Datenausgabe-Anfragesignal (REQ_out) von einer ausgangsseitig verbindbaren zweiten externen GALS-Schaltung zu empfangen, welches anzeigt, dass die zweite externen GALS-Schaltung vom lokal synchronen Schaltungsmodul (102) Ausgabedaten abfragt;
- den Empfang eines Datenausgabe-Anfragesignals (REQ_out) durch Senden eines Datenausgabe-Bestätigungssignals (ACK_out) an die zweite GALS-Schaltung zu bestätigen; und
- auf den Empfang des Datenausgabe-Anfragesignals (REQ_out) hin einen Taktzyklus eines Datenausgabe-Taktsignals (CLK_out) zu erzeugen und an das lokal synchrone Schaltungsmodul (102) auszugeben,
- bei der die Hüllschaltung (104) eine Arbiterschaltung (106; 206; 306) aufweist, die einen Eingangs-Anfrageport aufweist, dem das Dateneingangs-Anfragesignal (REQ_ln) zugeführt ist, und die einen Ausgangs-Anfrageport aufweist, dem das Datenausgabe-Anfragesignal (REQ_out) zugeführt ist, und die ausgebildet ist, während der Zeitdauer der Ausgabe des Taktzyklus des Dateneingangs-Taktsignals (CLK_in) kein Datenausgabe-Taktsignal (CLK_out) zu erzeugen und während der Zeitdauer der Ausgabe des Taktzyklus des Datenausgangs-Taktsignals (CLK_out) kein Dateneingangs-Taktsignal (CLK_in) zu erzeugen, **dadurch gekennzeichnet, dass**
- die Arbiterschaltung (206; 306) ein MUTEX-Element (206.2; 306.2) enthält, das ausgebildet ist, bei gleichzeitigem Vorliegen eines Dateneingabe-Anfragesignals (REQ_ln) und eines Datenausgabe-Anfragesignals (REQ_out) eines der beiden Anfragesignale (REQ_In oder REQ_out) zu bevorzugen und den Empfang des anderen der beiden Anfragesignale (REQ_In und REQ_out) zu verzögern, bis der Taktzyklus des auf das bevorzugte Anfragesignal (REQ_In oder REQ_out) hin erzeugten Taktsignals, also entweder des Dateneingangs- oder des Datenausgangs-Taktsignals (CLK_In oder CLK_out), beendet ist.

2. GALS-Schaltung (100) nach Anspruch 1, bei der die Hüllschaltung (104) ausgebildet ist, in dem Fall, dass weder ein Dateneingabe-Anfragesignal (REQ_In) noch ein Datenausgabe-Anfragesignal (REQ_out) anliegt, kein Taktsignal an das synchrone Schaltungsmodul (102) auszugeben.

3. GALS-Schaltung (100) nach Anspruch 1 oder 2, bei der der Eingangs-Anfrageport und der Ausgangs-Anfrageport der Arbiterschaltung (206; 306) jeweils ein UND-Gatter (206.1; 306.1 und 206.3; 306.3) mit zwei Signaleingängen aufweisen, wobei dem einen Signaleingang des jeweiligen UND-Gatters (206.1; 306.1 und 206.3; 306.3) das Dateneingabe-Anfragesignal (REQ_In) bzw. Datenausgabe-Anfragesignal (REQ_out) zugeführt ist und der andere Signaleingang des jeweiligen UND-Gatters (206.1; 306.1 und 206.3; 306.3) über eine jeweilige erste Verzögerungsschaltung (206.6; 306.6 und 206.4; 306.4) und ein jeweiliges Inverterelement (206.7; 306.7 und 206.5; 306.5) mit dem jeweils anderen Anfragesignal zugeordneten Taktsignalausgang (206.22; 306.22 und 206.21; 306.21) des MUTEX-Elements (206.2; 306.2), also dem Datenausgabe-Taktsignal-Ausgang (206.22; 306.22) bzw. dem Dateneingabe-Taktsignal-Ausgang (206.21; 306.21), verbunden ist.

4. GALS-Schaltung (100) nach einem der vorstehenden Ansprüche, bei der die Verzögerung des nicht bevorzugten Anfragesignals (REQ_In oder REQ_out) etwa 45 % der Dauer des Taktzyklus beträgt.

5. GALS-Schaltung (100) nach einem der Ansprüche 1 bis 4, bei der über den jeweiligen Taktsignal-Ausgang 206.21; 306.22 und 206.21; 306.22) des MUTEX-Elements (206.2; 306.2) zugleich das betreffende Dateneingabe- bzw. Datenausgabe-Bestätigungssignal (ACK_in und ACK_out) ausgegeben wird.

6. GALS-Schaltung (100) nach Anspruch 5, bei der das Dateneingabe- und das Datenausgabe-Bestätigungssignal (ACK_in und ACK_out) nach Ausgabe durch das MUTEX-Element (306.2) einer jeweiligen zweiten Verzögerungsschaltung (306.8 und 306.9) zugeführt ist.

7. GALS-Schaltung (100) nach Anspruch 6, bei der die jeweilige zweite Verzögerungsschaltung (306.8 und 306.9) ausgebildet ist, das zugeführte Signal (ACK_in und ACK_out) um zwischen 90 und 95% eines Taktzyklus zu verzögern.

8. Integrierte Schaltung mit einer oder mehreren GALS-Schaltungen (100) nach einem der Ansprüche 1 bis 7.

## Claims

1. Globally Asynchronous Locally Synchronous (GALS) circuit (100), having a locally synchronous circuit module (102) and an asynchronous wrapper circuit (104) which is connected to the locally synchronous circuit module (102) and is configured to:
- receive a data input request signal (REQ_In) from a first external GALS circuit connectable on the input side, which indicates that input data to be sent to the locally synchronous circuit module (102) are present at the first external GALS circuit;
- acknowledge receipt of a data input request signal by sending a data input acknowledgement signal (ACK_in) to the first external GALS circuit;
- on receiving the data input request signal (REQ_In), generate a clock cycle of a data input clock signal (CLK_in) and send it to the locally synchronous circuit module (102);
**characterised in that** the wrapper circuit (104) is additionally configured to:
- receive a data output request signal (REQ_out) from a second external GALS circuit connectable on the output side, which indicates that the second external GALS circuit is requesting output data from the locally synchronous circuit module (102);
- acknowledge receipt of a data output request signal (REQ_out) by sending a data output acknowledgement signal (ACK_out) to the second GALS circuit; and
- on receiving the data output request signal (REQ_out), generate a clock cycle of a data output clock signal (CLK_out) and send it to the locally synchronous circuit module (102);
- wherein the wrapper circuit (104) comprises an arbitration circuit (106; 206; 306) which comprises an input request port to which the data input request signal (REQ_In) is supplied, and which comprises an output request port to which the data output request signal (REQ_out) is supplied, and which is configured not to generate a data output clock signal (CLK_out) during the period of sending the clock cycle of the data input clock signal (CLK_in) and not to generate a data input clock signal (CLK_in) during the time of sending the clock cycle of the data output clock signal (CLK_out), **characterised in that**
- the arbitration circuit (206; 306) contains a MUTEX element (206.2; 306.2) which, when a data input request signal (REQ_In) and a data output request signal (REQ_out) are both present at the same time, is configured to give preference to one of the two request signals (REQ_In or REQ_out) and to delay the receipt of the other of the two request signals (REQ_In or REQ_out) until the clock cycle of the clock signal generated in response to the preferred request signal (REQ_In or REQ_out), i.e. either the data input or the data output clock signal (CLK_in or CLK_out), has ended.

2. GALS circuit (100) according to claim 1, wherein the wrapper circuit (104) is configured not to emit a clock signal to the synchronous circuit module (102) if neither a data input request signal (REQ_In) nor a data output request signal (REQ_out) is present.

3. GALS circuit (100) according to claim 1 or 2, wherein the input request port and the output request port of the arbitration circuit (206; 306) each comprise an AND gate (206.1; 306.1 and 206.3; 306.3) with two signal inputs, one signal input of the respective AND gate (206.1; 306.1 and 206.3; 306.3) being supplied with the data input request signal (REQ_In) or data output request signal (REQ_out) and the other signal input of the respective AND gate (206.1; 306.1 and 206.3; 306.3) being connected, via a first delay circuit (206.6; 306.6 and 206.4; 306.4) and a respective inverter element (206.7; 306.7 and 206.5; 306.5), to the clock signal output (206.22; 306.22 and 206.21; 306.21) of the MUTEX element (206.2; 306.2) that is associated with the other request signal, i.e. the data output clock signal output (206.22; 306.22) or the data input clock signal output (206.21; 306.21).

4. GALS circuit (100) according to one of the preceding claims, wherein the delay of the non-preferred request signal (REQ_In or REQ_out) amounts to about 45% of the duration of the clock cycle.

5. GALS circuit (100) according to one of claims 1 to 4, wherein the respective data input or data output acknowledgement signal (ACK_in and ACK_out) is emitted at the same time through the respective clock signal output (206.21; 306.22 and 206.21; 306.22) of the MUTEX element (206.2; 306.2).

6. GALS circuit (100) according to claim 5, wherein the data input and data output acknowledgement signal (ACK_in and ACK_out), after being emitted by the MUTEX element (306.2), are each supplied to a respective second delay circuit (306.8 and 306.9).

7. GALS circuit (100) according to claim 6, wherein the respective second delay circuit (306.8 and 306.9) is configured to delay the supplied signal (ACK_in and ACK_out) by between 90 and 95% of a clock cycle.

8. Integrated circuit having one or more GALS circuits (100) according to one of claims 1 to 7.

## Revendications

1. Circuit (GALS) Globalement Asynchrone Localement Synchrone (100), comportant un module localement synchrone (102) et un circuit d'enveloppe asynchrone (104), qui est relié au module localement synchrone (102) et est configuré
- pour recevoir un signal de requête en entrée de données (REQ_In), qui est émis par un premier circuit GALS externe pouvant être relié du côté entrée et qui indique que des données d'entrée, destinées à être émises vers le module localement synchrone (102), sont disponibles sur le premier circuit GALS externe ;
- pour confirmer l'entrée d'un signal de requête en entrée de données via l'émission d'un signal d'acquittement de l'entrée de données (ACK_in) vers le premier circuit GALS externe ;
- pour générer, en réponse au signal de requête en entrée de données (REQ_In), un cycle d'horloge d'un signal d'horloge pour l'entrée de données (CLK_in) et pour l'émettre vers le module localement synchrone (102) ;
**caractérisé en ce que** le circuit d'enveloppe (104) est configuré en outre
- pour recevoir un signal de requête en sortie de données (REQ_out), qui est émis par un deuxième circuit GALS externe pouvant être relié du côté sortie et qui indique que le deuxième circuit GALS externe requiert des données de sortie du module localement synchrone (102) ;
- pour confirmer la réception d'un signal de requête en sortie de données (REQ_out) via l'émission d'un signal d'acquittement de la sortie de données (ACK_out) vers le deuxième circuit GALS ; et
- pour générer, en réponse au signal de requête en sortie de données (REQ_out), un cycle d'horloge d'un signal d'horloge pour la sortie de données (CLK_out) et pour l'émettre vers le module localement synchrone (102),
- dans lequel le circuit d'enveloppe (104) comporte un circuit arbitre (106 ; 206 ; 306) qui comporte un port de requête en entrée, vers lequel est acheminé le signal de requête en entrée de données (REQ_ln), et qui comporte un port de requête en sortie vers lequel est acheminé le signal de requête en sortie de données (REQ_out), et qui est configuré pour ne générer aucun signal d'horloge pour la sortie de données (CLK_out) pendant la durée de l'émission du cycle d'horloge du signal d'horloge pour l'entrée de données (CLK_in), et pour ne générer aucun signal d'horloge pour l'entrée de données (CLK_in) pendant la durée de l'émission du cycle d'horloge du signal d'horloge pour la sortie de données (CLK_out), **caractérisé en ce que**
- le circuit arbitre (206 ; 306) contient un élément MUTEX (206.2 ; 306.2) qui est configuré pour préférer, en cas de présence simultanée d'un signal de requête en entrée de données (REQ_In) et d'un signal de requête en sortie de données (REQ_out), un des deux signaux de requête (REQ_In ou REQ_out) et pour retarder la réception de l'autre des deux signaux de requête (REQ_In ou REQ_out) jusqu'à ce que soit terminé le cycle d'horloge du signal d'horloge généré en réponse au signal de requête préféré (REQ_ln ou REQ_out), à savoir le signal d'horloge pour l'entrée de données ou pour la sortie de données (CLK_in ou CLK_out).

2. Circuit GALS (100) selon la revendication 1, dans lequel le circuit d'enveloppe (104) est configuré pour n'émettre aucun signal d'horloge vers le module synchrone (102) dans les cas où n'est disponible ni un signal de requête en entrée de données (REQ_In) ni signal de requête en sortie de données (REQ_out).

3. Circuit GALS (100) selon la revendication 1 ou 2, dans lequel le port de requête en entrée et le port de requête en sortie du circuit arbitre (206 ; 306) comportent chacun une porte ET (206.1 ; 306.1 et 206.3 ; 306.3) avec deux entrées de signaux, le signal de requête en entrée de données (REQ_In) ou le signal de requête en sortie de données (REQ_out) étant acheminé vers l'une des entrées de signaux de la porte ET (206.1 ; 306.1 et 206.3 ; 306.3) respective, et l'autre entrée de signaux de la porte ET (206.1 ; 306.1 et 206.3 ; 306.3) respective étant reliée, via un premier circuit de retard (206.6 ; 306.6 et 206.4 ; 306.4) respectif et un inverseur (206.7 ; 306.7 et 206.5 ; 306.5) respectif, à la sortie des signaux d'horloge (206.22 ; 306.22 et 206.21 ; 306.21), associée respectivement à l'autre signal de requête, de l'élément MUTEX (206.2 ; 306.2), c'est-à-dire la sortie des signaux d'horloge pour la sortie de données (206.22 ; 306.22) ou la sortie des signaux d'horloge pour l'entrée de données (206.21 ; 306.21).

4. Circuit GALS (100) selon l'une quelconque des revendications précédentes, dans lequel le retard du signal de requête (REQ_In ou REQ_out) non préféré correspond à environ 45 % de la durée du cycle d'horloge.

5. Circuit GALS (100) selon l'une quelconque des revendications 1 à 4, dans lequel via la sortie des signaux d'horloge (206.21 ; 306.22 et 206.21 ; 306.22) respective de l'élément MUTEX (206.2 ; 306.2) est émis à la fois le signal d'acquittement de l'entrée de données ou le signal d'acquittement de la sortie de données (ACK_in et ACK_out) concerné.

6. Circuit GALS (100) selon la revendication 5, dans lequel le signal d'acquittement de l'entrée de données ou le signal d'acquittement de la sortie de données (ACK_in et ACK_out) après l'émission par l'élément MUTEX (306.2) est acheminé vers un deuxième circuit de retard (306.8 et 306.9) respectif.

7. Circuit GALS (100) selon la revendication 6, dans lequel le deuxième circuit de retard (306.8 et 306.9) respectif est configuré pour retarder le signal (ACK_in et ACK_out) acheminé selon un délai entre 90 et 95 % d'un cycle d'horloge.

8. Circuit intégré comportant un ou plusieurs circuits GALS (100) selon l'une quelconque des revendications 1 à 7.
